# EUROPÄISCHE PATENTSCHRIFT

(11) **EP 1 200 697 B1**
(45) Veröffentlichungstag und Bekanntmachung des Hinweises auf die Patenterteilung: **24.01.2007**
(21) Anmeldenummer: 00960335.8
(22) Anmeldetag: 31.07.2000
(51) Int. Cl.: E05B 49/00

(54) **VORRICHTUNG ZUR PROGRAMMIERUNG UND LÖSCHUNG VON DATEN EINES DRAHTLOS STEUERBAREN DECODERS, INSBESONDERE EINER STEUERVORRICHTUNG FÜR GARAGENTORANTRIEBE**
DEVICE FOR PROGRAMMING AND ERASING DATA OF A WIRELESS CONTROLLED DECODER, IN PARTICULAR OF A CONTROL DEVICE FOR THE DEVICE CONTROLLING A GARAGE DOOR
DISPOSITIF POUR PROGRAMMER ET EFFACER DES DONNEES D'UN DECODEUR COMMANDE SANS FIL, EN PARTICULIER D'UN DISPOSITIF DE COMMANDE POUR LE DISPOSITIF D'ENTRAINEMENT D'UNE PORTE DE GARAGE

(30) Priorität: 06.08.1999 DE 19937178
(43) Veröffentlichungstag der Anmeldung: 02.05.2002
(73) Patentinhaber: SOMFY Feinmechanik und Elektrotechnik GmbH, 72105 Rottenburg (DE)
(72) Erfinder: KLEIN, Christian, D-71706 Markgröningen (DE); LAYES, Paul, D-70806 Kornwestheim (DE)
(74) Vertreter: Jakelski, Joachim
(86) Internationale Anmeldenummer: PCT/DE2000/002526
(87) Internationale Veröffentlichungsnummer: WO 2001/011170

(56) Entgegenhaltungen:
- EP-A- 0 212 050
- EP-A- 0 535 555
- WO-A-96/32307
- WO-A-97/31347
- US-A- 4 750 118
- US-A- 5 416 471

## Beschreibung

Die Erfindung betrifft eine Vorrichtung zur Programmierung und Löschung von Daten eines drahtlos steuerbaren Decoders nach der Gattung des Hauptanspruchs.

Aus der EP-A-535555 ist eine Vorrichtung zur Programmierung und Löschung von Daten eines drahtlos steuerbaren Decoders bekannt, bei der in einem Programmiermodus des Decoders wenigstens eine Codierung und in einem Steuermodus mit einer Codierung versehene Steuerdaten von einem Sender drahtlos zu dem Decoder übermittelt werden und der Decoder eine Decodiereinrichtung zum Vergleich von wenigstens einer in einem nicht-flüchtigen Speicher gespeicherten Codierung mit einer übermittelten Codierung sowie eine Freigabeeinstellung zur Freigabe der Steuerdaten bei übereinstimmenden Codierungen aufweist, wobei der Decoder Umschaltmittel zur automatischen Umschaltung in den Programmiermodus beim Einschalten der Versorgungsspannung und Rückschalten in den Steuermodus nach einer vorgebbaren Zeitspanne oder einer vorgebbaren Zeitspanne nach einem Programmiervorgang aufweist. Bei dieser Vorrichtung sind Handsender vorgesehen, welche eine Vielzahl von Druckknöpfen aufweisen. Zum Rücksetzen oder Löschen von Codierungen müssen verschiedene Druckschalter betätigt werden.

Ein als Steuereinrichtung ausgebildeter Decoder für einen Garagentorantrieb ist ferner beispielsweise aus der DE 38 01 245 C2 bekannt. Um sicherzustellen, dass nur drahtlos empfangene Signale eines zugeordneten Handsenders als Steuersignale zum Öffnen oder Schliessen des Garagentors interpretiert werden, besitzen diese drahtlos übertragenen Steuersignale eine Codierung, die im Decoder mit einer gespeicherten Codierung verglichen wird. Nur bei Übereinstimmung der Codierungen wird der Steuerbefehl ausgeführt. Um verschiedene Handsender verwenden zu können und um auch einen Austausch und Wechsel eines Handsenders durchführen zu können, werden die jeweiligen Codierungen dieser Handsender in einem Programmiermodus in einen nichtflüchtigen Speicher des Decodierers übertragen. Hierzu besitzt die Steuervorrichtung des Garagentorantriebs in der Garage eine Vielzahl von Bedien- und Programmierschaltern, wobei jedoch bei bisherigen bekannten Garagentorantrieben wenigstens eine Programmiertaste oder ein Programmierschalter zur Umschaltung in den Programmiermodus bzw. Rückschaltung in den Steuermodus erforderlich ist. Auch bei dieser Steuereinrichtung ist es erforderlich, nicht mehr benötigte Codierungen oder auch sonstige Daten zu löschen, wozu ebenfalls eine Taste oder ein Schalter bisher erforderlich war. Im Zuge der Kostenreduzierung wird jedoch generell angestrebt, die Zahl von Tasten und Schaltern zu reduzieren, da diese neben den Materialkosten noch Montagekosten verursachen und eine Quelle von Störungen und Defekten darstellen können.

### VORTEILE DER ERFINDUNG

Die erfindungsgemässe Vorrichtung mit den kennzeichnenden Merkmalen des Hauptanspruchs hat demgegenüber den Vorteil, dass zur Löschung von Codierungen oder anderen bei diesem Löschvorgang zur Löschung vorgesehenen Daten lediglich während einer Programmierphase die Versorgungsspannung kurzzeitig unterbrochen werden muss. Dadurch wird die Programmierphase nicht zu Ende geführt, und die festlegbare Kennung kann dadurch nicht am Ende der Programmierphase eingespeichert werden. Beim darauffolgenden Programmstart beim Wiedereinschalten der Versorgungsspannung wird eine von der festlegbaren Kennung abweichende Kennung festgestellt und die Löschung dadurch automatisch vorgenommen. Für diese Vorgänge sind keinerlei Schalter oder Tasten erforderlich.

Zur gezielten Löschung von Daten oder Codierungen sind Mittel zur Speicherung einer von einer festlegbaren Kennung abweichenden Kennung in einem festlegbaren Bereich des nichtflüchtigen Speichers vor Beginn der Programmierphase und zur Speicherung der festlegbaren Kennung in diesem festlegbaren Bereich am Ende der Programmierphase vorgesehen, wobei weiterhin Mittel zur Löschung wenigstens der Codierung oder Codierungen im nichtflüchtigen Speicher des Decoders nach dem Einschalten der Versorgungsspannung bei einer von der festlegbaren Kennung abweichenden Kennung im nichtflüchtigen Speicher zu diesem Zeitpunkt vorgesehen sind.

Durch die in den Unteransprüchen aufgeführten Massnahmen sind vorteilhafte Weiterbildungen und Verbesserungen der im Hauptanspruch angegebenen Vorrichtung möglich.

Die festlegbare Kennung hat vorzugsweise den Wert null, das heisst, zur Einspeicherung dieser Kennung braucht lediglich der festlegbare Bereich des nichtflüchtigen Speichers gelöscht werden, wobei dieser festlegbare Bereich vorzugsweise eine feste Adresse oder ein fester Adressenbereich ist.

Zweckmässigerweise ist eine Zeitablaufsteuerung vorgesehen, durch die die Daten bei Erfüllung der Löschungsbedingungen vor Beginn der Programmierphase gelöscht werden.

Die festlegbare Kennung und/oder Codierungen (Daten) werden vorzugsweise in Form von verschlüsselten Daten abgelegt.

In vorteilhafter Weise weist der festlegbare Bereich des nichtflüchtigen Speichers im Auslieferungszustand der Vorrichtung eine von der festlegbaren Kennung abweichende Kennung auf, so dass automatisch beim ersten Einschalten eine Löschung erfolgt und damit ein Initialzustand hergestellt wird. Anschliessend können dann die Codierungen der beigefügten Handsender eingespeichert werden.

Es hat sich auch als vorteilhaft erwiesen, dass Zeitverzögerungsmittel zum Einschalten des Programmiermodus erst nach einer festgelegten Zeit nach dem Einschalten der Versorgungsspannung oder nach dem Löschen der Daten vorgesehen sind, da hierdurch ein Sicherungsabstand zum Einschalten der Versorgungsspannung vorgegeben wird, der verhindert, dass Störungen der Energieversorgung zum Löschen von Codierungen oder anderen Daten führen.

### ZEICHUNG

Ein Ausführungsbeispiel der Erfindung ist in der Zeichnung dargestellt und in der nachfolgenden Beschreibung näher erläutert. Es zeigen:
- Fig. 1: eine schematische Seitenansicht eines Garagentorantriebs,
- Fig. 2: ein Prinzipschaltbild der Steuerung dieses Garagentorantriebs und
- Fig. 3: ein Flussdiagramm zur Erläuterung der Wirkungsweise.

### BESCHREIBUNG DES AUSFÜHRUNGSBEISPIELS

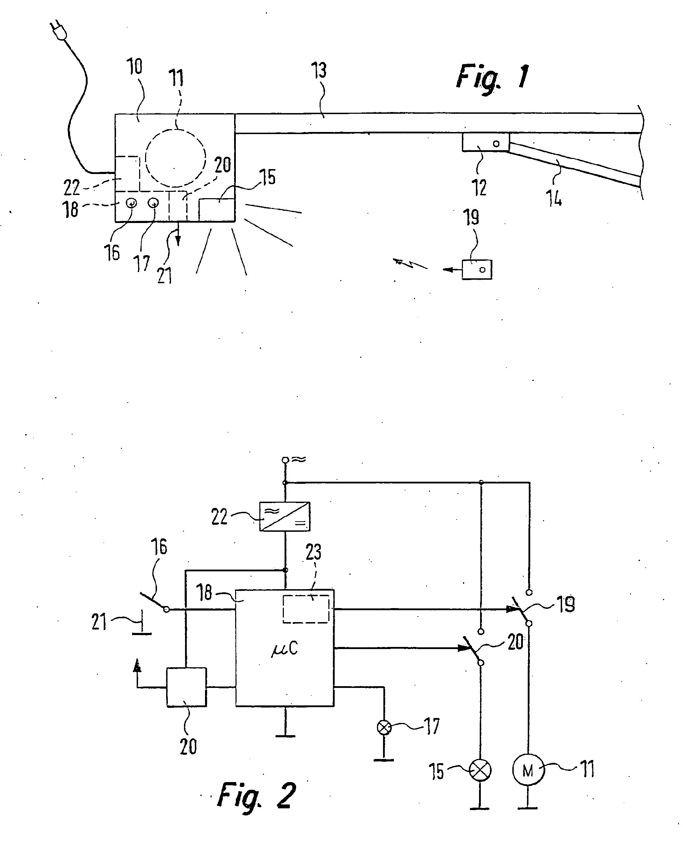

Bei dem in Fig. 1 schematisch und beispielhaft dargestellten Garagentorantrieb dient ein in einem Gehäuse 10 angeordneter, ebenfalls schematisch dargestellter Antriebsmotor 11 zum Antrieb eines Koppelglieds 12, das entlang einer Führungsschiene 13 verfahrbar ist. Das Gehäuse 10 und die Führungsschiene 13 werden in üblicher Weise an der Decke einer nicht dargestellten Garage montiert. Zum Antrieb des Koppelglieds 12 dient ein nicht dargestellter Kettenantrieb, ein Riemenantrieb oder eine sonstige für Garagentorantriebe bekannte Antriebsvorrichtung.

Ein nicht dargestelltes Garagentor ist an einer ebenfalls nicht dargestellten Garagentoröffnung schwenkbar gelagert und mittels einer Antriebsstange 14 mit dem Koppelglied 12 schwenkbar verbunden, so dass bei einer Bewegung des Koppelglieds 12 entlang der Führungsschiene 13 das Garagentor geöffnet oder geschlossen werden kann. Im Gehäuse 10 ist eine Garagen-Beleuchtungseinrichtung 15 integriert, die in üblicher Weise für eine vorgebbare Zeit eingeschaltet wird, wenn der Antriebsmotor 11 betätigt wird.

Selbstverständlich kann das Gehäuse 10 mit dem Antriebsmotor 11 in bekannter Weise auch an anderen Stellen montiert sein, beispielsweise am Garagentor selbst. Prinzipiell kommt es für die vorliegende Erfindung nicht auf die Ausbildung des Garagentorantriebs an.

Am Gehäuse 10 ist noch zusätzlich ein beispielsweise als Tastschalter ausgebildeter Bedienschalter 16 vorgesehen, der auf einen als elektronische Steuereinrichtung und Decoder dienenden Mikrocontroller 18 einwirkt, der in Fig. 2 schaltungsmässig dargestellt ist. Weiterhin ist am Gehäuse 10 eine beispielsweise als Leuchtdiode ausgebildete Kontrolleuchte 17 angeordnet, die bei einer einfacheren Ausführung auch entfallen kann.

Gemäss Fig. 2 wird der Antriebsmotor 11 durch einen Steuerausgang des Mikrocontrollers 18 mittels eines Schalters 19 ein- und ausgeschaltet, der im Stromkreis des Antriebsmotors 11 liegt und beispielsweise als Relais oder Halbleiterschalter ausgebildet ist. Ein weiterer Ausgang des Mikrocontrollers 18 wirkt auf einen weiteren Schalter 20 ein, der im Stromkreis der Garagen-Beleuchtungseinrichtung 15 geschaltet ist. Die Kontrolleuchte 17 wird ebenfalls durch den Mikrocontroller gesteuert, was entweder gemäss Fig. 2 direkt oder ebenfalls über einen Schalter erfolgen kann.

Der dargestellte und beschriebene Garagentorantrieb wird drahtlos durch einen Sender 19 gesteuert, der als Funk- oder Infrarotsender ausgebildet sein kann. Im Gehäuse 10 ist ein entsprechender Empfänger 20 angeordnet, der die drahtlosen Signale über eine Antenne 21 empfängt. Im Falle einer Infrarotübertragung wird entsprechend eine Empfangsdiode eingesetzt. Der Mikrocontroller 18 und der Empfänger 20 werden über ein Netzteil 22 mit der erforderlichen Betriebsgleichspannung versorgt.

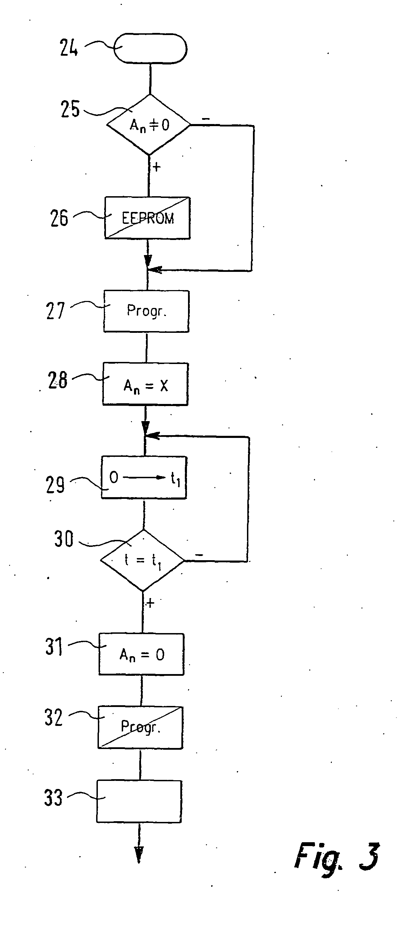

Um zu verhindern, dass die Betätigung des Garagentorantriebs durch beliebige Sender 19 möglich ist, wird eine Codierung vorgesehen, das heisst, die Steuersignale des Senders 19, die eine Codierung aufweisen, die einer im Mikrocontroller 18 gespeicherten Codierung entspricht, werden als Steuersignale zum Öffnen und Schliessen des Garagentors verwendet. Die Codierung ist dabei in einem nichtflüchtigen Speicher 23 des Mikrocontrollers 18 abgelegt, der beispielsweise als EEPROM ausgebildet ist. Das Einspeichern und Löschen solcher Codierungen mittels des Senders 19 wird im folgenden anhand von Fig. 3 erläutert. Nach dem Einschalten der Versorgungsspannung erfolgt der Programmstart 24 im Mikrocontroller 18. Danach wird in einem Abfrageschritt 25 eine unter einer Adresse An im Speicher 23 abgelegte Kennung abgefragt. Im Auslieferungszustand des Antriebs ist diese Kennung ungleich null, so dass in einem Löschvorgang 26 unter bestimmten Adressenbereichen abgelegte Codierungen gelöscht werden. Selbstverständlich ist hier zur Initialisierung auch noch die Löschung weiterer Daten möglich. Danach erfolgt in einem weiteren Schritt 27 die Umschaltung in den Programmiermodus. Zu Beginn dieses Programmiermodus wird die Kennung unter der Adresse An in einem Speicherschritt 28 auf einen Wert X gesetzt, der ungleich null ist. Danach erfolgt ein Zeitsteuervorgang 29, der den Programmiermodus während einer Zeit t1 aufrechterhält. In einem Abfrageschritt 30 wird zyklisch überprüft, ob diese Zeit t1 schon erreicht ist. Wenn dies der Fall ist, so wird in einem Speicherschritt 31 die Kennung unter der Adresse An auf den Wert null gesetzt. Danach wird im Schritt 32 der Programmiermodus beendet und in den Steuermodus 33 umgeschaltet.

Wenn der Sender 19 während des Programmiermodus betätigt wird, so wird seine entsprechende Codierung in den dafür vorgesehenen Adressenbereich des Speichers 23 des Mikrocontrollers 18 übernommen. Wenn mehrere Sender 19 mit unterschiedlichen Codierungen verwendet werden, so können hier auch unterschiedliche Codierungen eingespeichert werden, so dass die entsprechenden Sender zur Steuerung des Garagentors verwendet werden können. Nach der Umschaltung in den Steuermodus 33 erfolgt dann bei einer Betätigung des Senders 19 nur noch eine Decodierung, das heisst ein Vergleich der übermittelten Codierung mit der gespeicherten Codierung, und wenn eine Übereinstimmung vorliegt, so wird der Antriebsmotor 11 je nach Position des Garagentors zum Öffnen oder Schliessen eingeschaltet. Ein solches Öffnen oder Schliessen kann auch manuell ohne Sender durch Betätigung des Bedienschalters 16 erfolgen.

Die Kontrolleuchte 17 leuchtet auf, wenn im Programmiermodus eine übertragene Codierung korrekt in den Speicher 23 eingespeichert wurde. Durch verschiedene Signalfolgen oder Betätigungsarten können auch noch andere Vorgänge im Programmier- und/oder Steuermodus durch diese Kontrollleuchte bestätigt werden. In einer einfacheren Ausführung kann diese Kontrolleuchte 17 selbstverständlich auch entfallen, oder ihre Funktionen können von der ohnehin vorhandenen Beleuchtungseinrichtung 15 übernommen werden, das heisst, ein kurzes Aufleuchten dieser Beleuchtungseinrichtung 15 bestätigt beispielsweise die korrekte Einspeicherung einer Codierung.

Wird die Stromversorgung unterbrochen, beispielsweise infolge von Montage- oder Reparaturarbeiten, durch Unterbrechungen der gesamten Stromversorgung oder durch Auslösen einer Sicherung, so erfolgt anschliessend beim Wiedereinschalten der Stromversorgung ein erneuter Programmstart. Da am Ende jedes Programmiermodus unter der Adresse An die Codierung null eingespeichert wird, wird nach dem Abfrageschritt 25 kein Löschvorgang 26 vorgenommen, so dass alle Codierungen erhalten bleiben. Will man dagegen bewusst Codierungen löschen, so kann dies in einfacher Weise dadurch erfolgen, dass zunächst die Stromversorgung über einen Schalter, eine Sicherung oder durch Lösen des Verbindungskabels kurzzeitig unterbrochen wird. Dadurch wird ein erneuter Programmstart ausgelöst, der zu einer Umschaltung in den Programmiermodus führt. Nun wird während dieses Programmiermodus eine erneute kurzzeitige Unterbrechung der Versorgungsspannung vorgenommen, so dass die Einspeicherung der Kennung null unter der Adresse An (Löschen der Adresse) nicht mehr vorgenommen wird und unter dieser Adresse der zu Beginn des Programmiermodus eingespeicherte Wert X erhalten bleibt. Beim erneuten Programmstart wird daher im Abfrageschritt 25 ein Speicherwert unter der Adresse An festgestellt, der ungleich null ist. Dies führt zum Löschvorgang 26.

In Abweichung der dargestellten und beschriebenen Ablaufsteuerung kann nach dem Programmstart 24 noch eine Zeitverzögerung vorgesehen werden, die verhindert, dass durch Störungen und Impulse beim Wiedereinschalten der Energieversorgung fehlerhafte Lösch- und/oder Programmiervorgänge erfolgen.

Im Ausführungsbeispiel führt eine Kennung null, also eine Löschung der Adresse An, zu einer Verhinderung der Löschung von Codierungen, während jeder andere Speicherwert zu einer Löschung führt. Anstelle des Werts null kann selbstverständlich jeder beliebige andere Kennungswert verwendet werden.

Die Daten im Speicher 23 können auch verschlüsselt abgelegt werden, wobei jeweils bei einem Prüfvorgang dann eine Entschlüsselung erfolgt. Dies dient zu einer Erhöhung der Bedienungssicherheit.

Die Erfindung ist selbstverständlich nicht auf die Anwendung für Garagentore beschränkt, sondern kann überall dort eingesetzt werden, wo drahtlos codierte Steuerbefehle übermittelt werden, zum Beispiel bei der drahtlosen Verriegelung und Entriegelung von Türschlössern, bei Funkadaptern und dergleichen.

In Abweichung der in Fig. 3 dargestellten Ablaufsteuerung kann die Zeitsteuerung 29 auch nach jedem erfolgten Programmierschritt wieder neu gestartet werden, das heisst, nur wenn keine Programmierung bzw. Einspeicherung von Codierungen erfolgt, beträgt die Länge der Programmierphase t1. Andernfalls verlängert sich die Programmierphase entsprechend

## Patentansprüche

1. Vorrichtung zur Programmierung und Löschung von Daten eines drahtlos steuerbaren Decoders, insbesondere einer Steuervorrichtung für Garagentorantriebe, wobei in einem Programmiermodus des Decoders Wenigstens eine Codierung und in einem Steuermodus mit einer Codierung versehene Steuerdaten von einem Sender drahtlos dem Decoder übermittelt werden und der Decoder eine Decodiereinrichtung zum Vergleich von wenigstens einer in einem nichtflüchtigen Speicher gespeicherten Codierung mit einer übermittelten Codierung sowie eine Freigabeeinrichtung zur Freigabe der Steuerdaten bei übereinstimmenden Codierungen besitzt, wobei der Decoder (18) Umschaltmittel zur automatischen Umschaltung in den Programmiermodus (27) beim Einschalten der Versorgungsspannung und Rückschalten in den Steuermodus (33) nach einer vorgebbaren Zeitspanne oder einer vorgebbaren Zeitspanne nach einem Programmiervorgang aufweist, **dadurch gekennzeichnet, daß** Mittel zur Speicherung (28) einer von einer festlegbaren Kennung abweichenden Kennung (X) in einem festlegbaren Bereich (An) des nichtflüchtigen Speichers (23) vor Beginn der Programmierphase und zur Speicherung (31) der festlegbaren Kennung in diesem festlegbaren Bereich (An) am Ende der Programmierphase vorgesehen sind, und daß Mittel zur Löschung (26) wenigstens der Codierung oder Codierungen im nichtflüchtigen Speicher (23) des Decoders (18) nach dem Einschalten der Versorgungsspannung bei einer von der festlegbaren Kennung abweichenden Kennung im nichtflüchtigen Speicher (23) zu diesem Zeitpunkt vorgesehen sind.

2. Vorrichtung nach Anspruch 1, **dadurch gekennzeichnet, daß** die festlegbare Kennung der Wert null ist.

3. Vorrichtung nach Anspruch 1 oder 2, **dadurch gekennzeichnet, daß** der festlegbare Bereich im nichtflüchtigen Speicher (23) eine feste Adresse (An) oder ein fester Adressenbereich ist.

4. Vorrichtung nach einem der Ansprüche 1 bis 3, **dadurch gekennzeichnet, daß** eine die Löschung der Daten bei Erfüllung der Löschungsbedingungen vor Beginn der Programmierphase (27) durchführende Ablaufsteuerung vorgesehen ist.

5. Vorrichtung nach einem der Ansprüche 1 bis 4, **dadurch gekennzeichnet, daß** die festlegbare Kennung und/oder Codierungen in Form von verschlüsselten Daten abgelegt werden.

6. Vorrichtung nach einem der Ansprüche 1 bis 5, **dadurch gekennzeichnet, daß** der festlegbare Bereich (An) des nichtflüchtigen Speichers (23) im Auslieferungszustand der Vorrichtung eine von der festlegbaren Kennung abweichende Kennung aufweist.

7. Vorrichtung nach einem der vorhergehenden Ansprüche, **dadurch gekennzeichnet, daß** Zeitverzögerungsmittel zum Einschalten des Programmiermodus erst nach einer festgelegten Zeit nach dem Einschalten der Versorgungsspannung oder nach der Löschung (26) der Daten vorgesehen sind.

## Claims

1. Device for programming and erasing data of a wireless controlled decoder, in particular of a control device for garage door drives, where at least one coding is transmitted by radio to the decoder in a programming mode of the decoder and control data provided with a coding are transmitted by radio to the decoder in a control mode, and where the decoder comprises a decoding means for comparing at least one coding stored in a non-volatile storage with a transmitted coding, and a release device for releasing the control data when the codings conform one with the other, the decoder (18) comprising switching means for automatically switching to the programming mode (27) when the supply voltage is switched on and for switching back to the control mode (33) after a predeterminable period of time, or a predeterminable time after a programming operation, **characterized in that** means are provided for storing (28) an identifier (X) that deviates from a definable identifier in a definable area (An) of the non-volatile storage (23) prior to commencement of the programming phase and for storing (31) the definable identifier **in that** definable area (An) at the end of the programming phase, and that means are provided for erasing (26) at least the coding or codings in the non-volatile storage (22) of the decoder (18) after the supply voltage has been switched on when the identifier in the non-volatile storage (23) deviates from the definable identifier at that time.

2. The device as defined in Claim 1, **characterized in that** the definable identifier is zero.

3. The device as defined in Claim 1 or Claim 2, **characterized in that** the definable area in the non-volatile storage (23) is a fixed address (An) or a fixed range of addresses.

4. The device as defined in any of Claims 1 to 3, **characterized in that** a sequence control is provided that is adapted to erase the data prior to commencement of the programming phase (27) when the preconditions for erasure as fulfilled.

5. The device as defined in any of Claims 1 to 4, **characterized in that** the definable identifier and/or codings are filed in the form of encoded data.

6. The device as defined in any of Claims 1 to 5, **characterized in that** the definable area (An) of the non-volatile storage (23) has an identifier that deviates from the definable identifier in the delivery condition of the device.

7. The device as defined in any of the preceding claims, **characterized in that** time delay means are provided for switching on the programming mode only at the end of a predefined period of time after the supply voltage has been switched on or the data have been erased (26).

## Revendications

1. Dispositif de programmation et d'effacement des données d'un décodeur pouvant être commandé sans fil, en particulier d'un dispositif de commande pour le dispositif d'entrainement d'une porte de garage, dans lequel, dans un mode de programmation du décodeur, au moins un codage et dans un mode de commande des données de commande pourvues d'un codage sont transmises au décodeur depuis un émetteur sans fil et le décodeur possède un dispositif de décodage destiné à comparer au moins un codage mémorisé dans une mémoire non volatile avec un codage transmis ainsi qu'un dispositif de validation destiné à valider les données de commande lorsque les codages concordent, dans lequel le décodeur (18) présente des moyens de commutation destinés à commuter automatiquement dans le mode de programmation (27) lorsque la tension d'alimentation est mise en marche et à rétrograder dans le mode de commande (33) après un intervalle de temps pouvant être prescrit ou un intervalle de temps pouvant être prescrit après un processus de programmation,
**caractérisé par**
des moyens de mémorisation (28) pour enregistrer avant le début de la phase de programmation une caractéristique (X) décrivant d'une caractéristique déterminée dans une zone déterminée (An) de la mémoire non volatile (23), et de la mémorisation (31) à la fin de la phase de programmation la caractéristique déterminée dans cette zone déterminée (An), et
des moyens d'effacement (26) au moins du codage ou des codages dans la mémoire non volatile (23) du décodeur (18) après la mise en marche de la tension d'alimentation lorsqu'une caractéristique dérivant de la caractéristique déterminée apparaît à cet instant dans la mémoire non volatile (23).

2. Dispositif selon la revendication 1,
**caractérisé en ce que**
la caractéristique déterminée est la valeur zéro.

3. Dispositif selon la revendication 1 ou 2,
**caractérisé en ce que**
la zone déterminée dans la mémoire non volatile (23) est une adresse fixe (An) ou un zone d'adresse plus fixe.

4. Dispositif selon l'une quelconque des revendications 1 à 3,
**caractérisé en ce qu'**
une commande séquentielle réalisant l'effacement des données est prévue avant le début de la phase de programmation (27) lorsque les conditions d'effacement sont satisfaites.

5. Dispositif selon l'une quelconque des revendications 1 à 4,
**caractérisé en ce que**
la caractéristique déterminée et/ou les codages sont entrés en mémoire sous la forme de données codées.

6. Dispositif selon l'une quelconque des revendications 1 à 5,
**caractérisé en ce que**
la zone déterminée (An) de la mémoire non volatile (23) présente à l'état de livraison du dispositif une caractéristique dérivant de la caractéristique déterminée.

7. Dispositif selon l'une quelconque des revendications précédentes,
**caractérisé par**
des moyens de temporisation pour enclencher le mode de programmation seulement après un temps déterminé après la mise en marche de la tension ou après l'effacement (26) des données.
